# EUROPEAN PATENT SPECIFICATION

(11) **EP 0 842 854 B1**
(45) Date of publication and mention of the grant of the patent: **07.03.2001**
(21) Application number: 97890227.8
(22) Date of filing: 13.11.1997
(51) Int. Cl.: B65B 51/22

(54) **Induction sealing apparatus for sealing a foil cap to a container opening**
Vorrichtung zum Induktionssiegeln einer Folienkappe auf einer Behälteröffnung
Dispositif de scellage par induction pour sceller un couvercle à opercule sur l'embouchure d'un récipient

(30) Priority: 15.11.1996 US 30488 P; 07.11.1997 US 966305
(43) Date of publication of application: 20.05.1998
(73) Proprietor: Auto-Mate Technologies, LLC, Riverhead, NY 11901 (US)
(72) Inventor: Herzog, Kenneth J., Hampton Bays, New York 11946 (US); Sarles, William, Lexington, MA 02173 (US)
(74) Representative: Kopecky, Helmut, Dipl.-Ing. Kopecky & Schwarz Patentanwälte

(56) References cited:
- WO-A-97/22523
- DE-A- 4 213 830

## Description

### BACKGROUND OF THE INVENTION

### 1. Field of the Invention

The present invention relates to an induction sealing apparatus which seals a foil sheet or liner to the opening of a container and more particularly to an induction sealing apparatus which is air cooled.

### 2. Related Art

Induction sealing units for sealing, hermetically sealing or tamper-proof sealing a container with a foil liner are typically included in conveyor systems for high volume applications. These systems usually have flat or tunnel sealing heads mounted above a conveyor, which conveyor carries a plurality of containers to be sealed into proximity with the sealing head.

The containers to be sealed are preconditioned to include a foil liner disposed over the opening of the container. Usually, the foil liner is held in place by a screw-on or snap-on cap as is known in the art. Sometimes a wax compound and a paperboard portion are included above the foil liner.

Once the preconditioned container is brought within a predetermined distance from the sealing head, a coil within the sealing head produces an electromagnetic field near the foil liner which is disposed within the cap. The electromagnetic flux produced by the field causes current to flow in the foil liner which causes the foil liner to heat and melt the lip of the container (and wax compound if used). The molten plastic adheres the foil liner to the opening of the container and, when the plastic cools, a seal is produced. The downward force supplied by the cap ensures a proper bond between the foil liner and the opening of the container, particularly when the molten plastic is cooling.

Typically, power supplies which include solid state switching circuits generate high frequency currents for delivery to the coil within the sealing head to produce the requisite electromagnetic field for heating the foil liner. In addition, the coil in the sealing head is disposed around dense ferrite materials to channel the electromagnetic field and direct the field flux towards the foil liner for improved performance. Generally, the power supplies deliver approximately 2 to 4 kilowatts of power to the sealing head in order to properly seal the container.

In conventional systems, high currents are produced in the coil of the sealing head and, due to the relatively high resistance of the coil, results in a drastic elevation of the temperature of the coil and any surrounding structures. Therefore, the induction sealing units of the prior art employ hollow copper tubing when forming the coil in the sealing head to permit cooling water to flow through the hollow copper tube coil and cool the sealing head.

Unfortunately, the water cooling systems which cool the sealing heads (via hollow copper tubing coils) are expensive, bulky and inefficient. Such water cooling systems require tubing, radiators, radiator fans, circulators, pumps and the like in order to adequately cool the system.

German Patent DE-A - 42 13 830 discloses an induction heater for sealing a container with a plastic coated foil liner using a multipiece ferromagnetic core, in which an electric coil is wound around the flanks of the core piece. A series of fans blow air through the coil in order to dissipate accumulated heat. The core is sized such that it is slightly wider than the foil so as to ensure that the inductive field accomodates the foil which is passed along the flat induction heater level.

### SUMMARY OF THE INVENTION

Accordingly, it is an object of the present invention to provide an induction sealing unit which does not require expensive and bulky water cooling systems.

Another object is to provide such an induction sealing head which includes an air cooled sealing head.

A further object of the present invention to provide an induction sealing head which is more energy efficient.

It is also an object to provide such an induction sealing head that is easy to use, manufacture and maintain.

It has been found that the above and other objects of the present invention are attained in a cap sealing unit having a frame; a ferrite core disposed within the frame; a litz wire coil disposed proximate to the ferrite core for producing an electromagnetic field within the ferrite core. The ferrite core and litz wire coil are preferably forming a recess to receive an opening portion of a container and a foil located proximate to the opening portion, the recess being adapted to direct the electromagnetic field toward a foil to seal the opening of the container with the foil.

The cap sealing unit may also include a heatsink coupled to the housing, where at least part of the ferrite core is bonded or operatively coupled to the heatsink for transferring heat thereto.

According to another aspect of the invention, the cap sealing unit includes a ferrite core; a litz wire coil having a resistance, the coil being disposed proximate to the ferrite core producing an inductance; a tuning capacitor operatively coupled in series with the coil forming a resonant circuit having a resonance frequency; and a power supply unit adapted to provide output current at an output frequency to the tuned circuit, the power supply unit including a control circuit adapted to control the output frequency to substantially match the resonance frequency of the resonant circuit.

Other features and advantages of the present invention will become apparent from the following description of the invention which refers to the accompanying drawings.

### BRIEF DESCRIPTION OF THE DRAWING

For the purpose of illustrating the invention, there are shown in the drawing embodiments which are presently preferred, it being understood, however, that the invention is not limited to the precise arrangements and instrumentalities shown.
Fig. 1 shows a perspective view of an induction sealing conveyor system employing an air cooled sealing head in accordance with the present invention;
Fig. 2a is a front elevational view of an induction sealing unit employing the air cooled sealing head of the present invention;
Fig. 2b is a side elevational view of the induction sealing unit of Fig. 2a;
Fig. 2c is a front elevational view of an alternative design of the induction sealing unit of Fig. 2a;
Fig. 2d is an elevational view of another alternative design of the induction sealing unit of Fig. 2a;
Fig. 3 is a side elevational view of an embodiment of the sealing head of the present invention;
Figs. 3a-3g are side elevational views of alternative embodiments of the sealing head of Fig. 3;
Fig. 4a is a bottom plan view of the coil and ferrite core of the sealing head of the present invention;
Fig. 4b is a side elevational view of Fig. 4a which includes a schematic representation of the flux lines of an electromagnetic field produced by the coil and ferrite core of the sealing head;
Fig. 5a is a side elevational view of the ferrite core arrangement of the sealing head of the present invention;
Fig. 5b shows a top view of the ferrite core arrangement of Fig. 5a;
Fig. 5c shows a side view of the ferrite core arrangement of Fig. 5a;
Figs. 6a and 6b show exploded views of the sealing heads of Figs. 3 and 3a, respectively;
Fig. 7 shows a block diagram of a preferred power supply for driving the sealing head of the present invention; and
Figs. 8a-8d show a schematic diagram of one preferred implementation of the power supply of Fig. 7.

### DETAILED DESCRIPTION OF PREFERRED EMBODIMENT

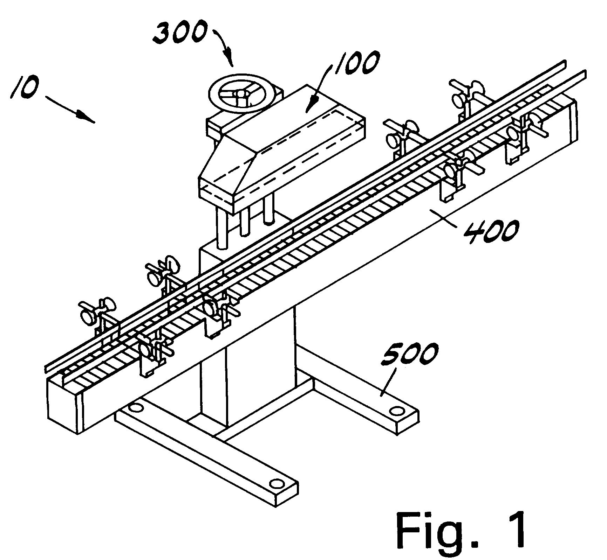

Referring now to the drawings wherein like numerals indicate like elements, there is shown in Fig. 1 an induction sealing conveyor system 10. The induction sealing conveyor system 10 includes an induction sealing unit 100, an adjustment mechanism 300, a conveyor 400, and a base 500. The adjustment mechanism 300 adjustably couples the induction sealing unit 100 to the base 500. Thus, the induction sealing unit 100 may be raised or lowered with respect to the base 500 and the conveyor 400 for insuring that the induction sealing unit is the proper distance from a container (not shown) to be sealed which travels down the conveyor 400. The adjustment mechanism 300 and the conveyor 400 are well-known in the art and any of the known adjustment mechanisms and conveyors can be used with the induction sealing unit 100 of the present invention.

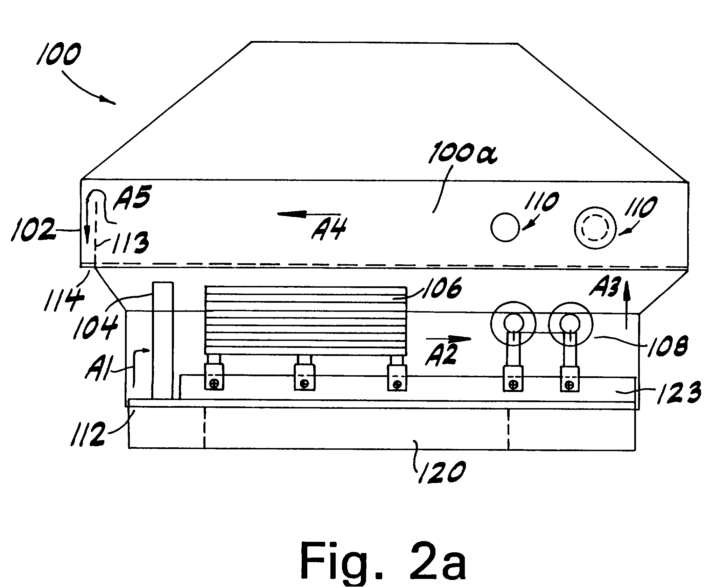

With reference to Fig. 2a, the induction sealing unit comprises a housing 102 and start and stop switches 110 disposed on the housing 102 for activating and deactivating the induction sealing unit 100. The components within the housing 102 include a fan 104, a capacitor 106, a transformer 108, a sealing head 120 and a power supply (not shown), the operation of which will be described below. The sealing head 120 extends from the bottom of the housing 102.

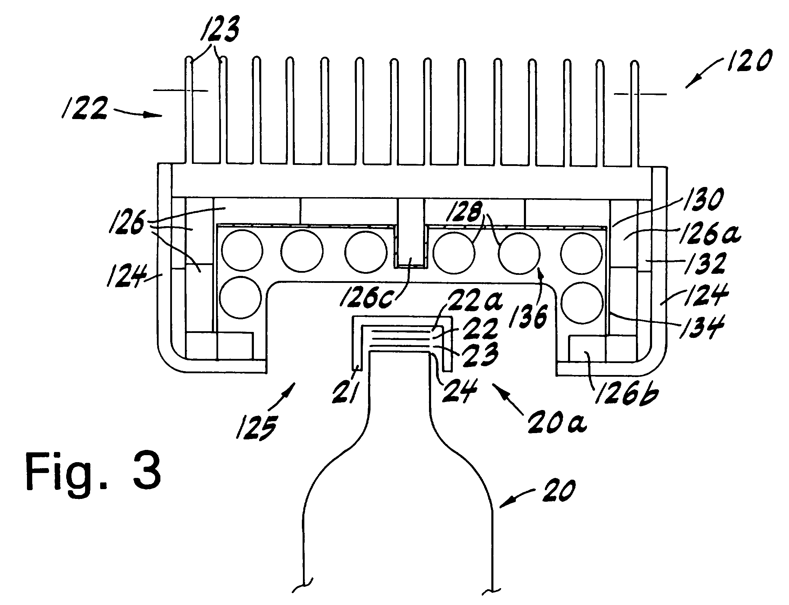

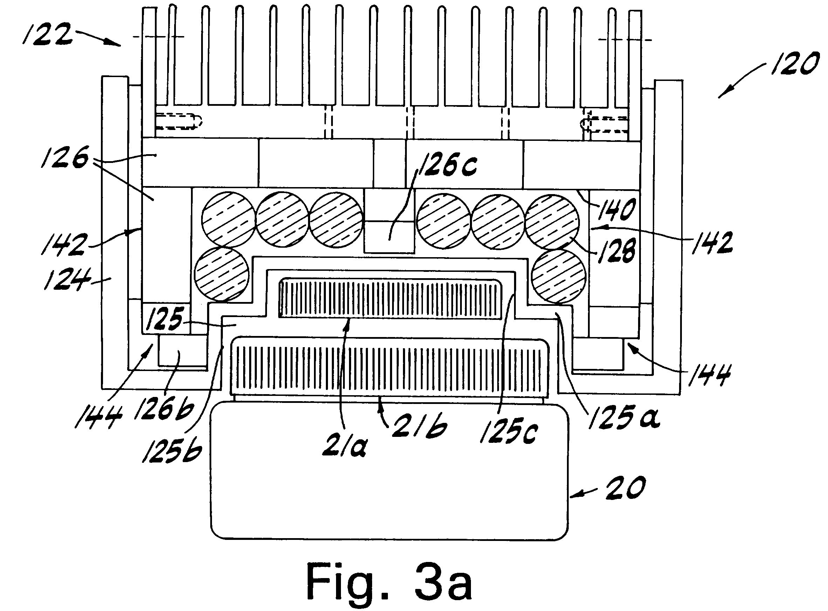

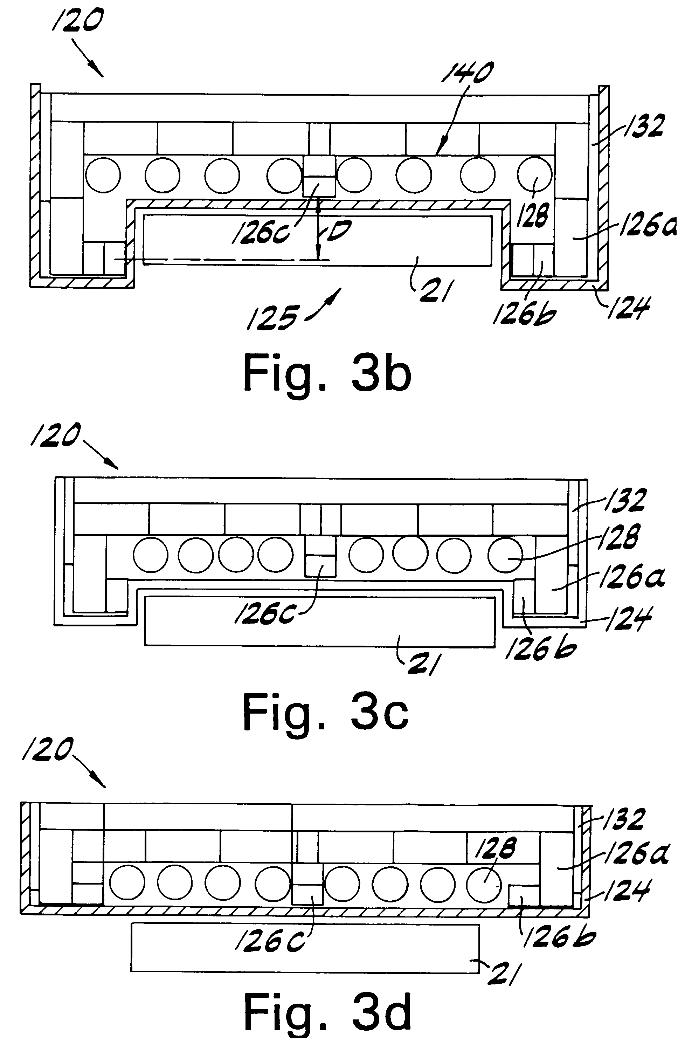

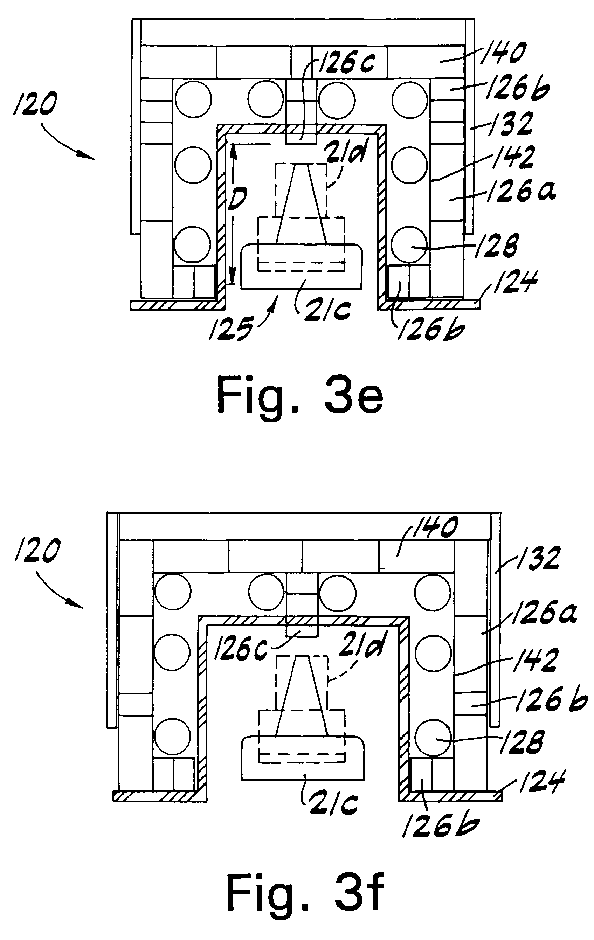

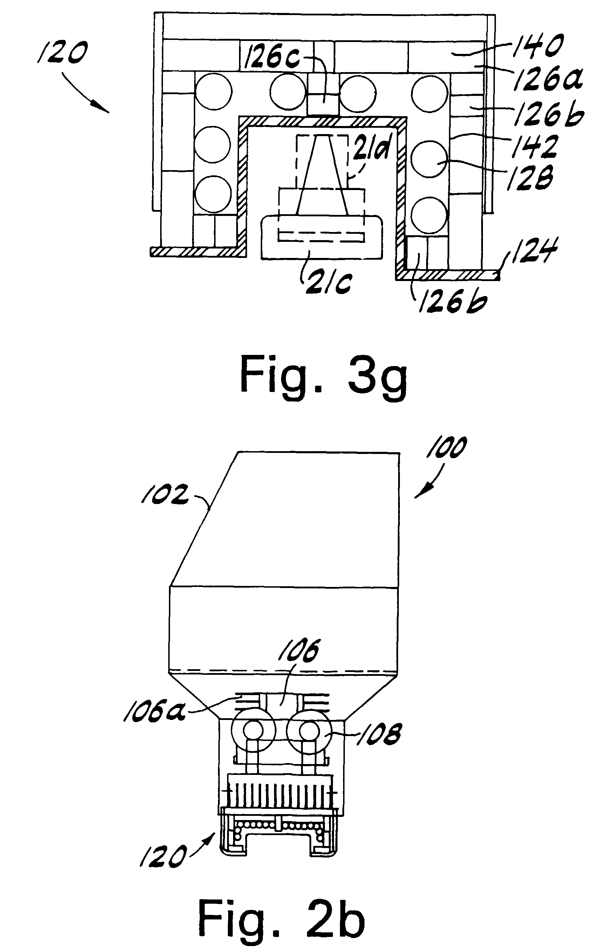

Fig. 2b shows a side elevational view of the sealing head 120 extending from the bottom of the housing 102 and Fig. 3 shows an enlarged view of the same. It is noted that the capacitor 106 preferably includes a heatsink 106a having fins for air cooling the capacitor 106.

With reference to Fig. 3, the sealing head 120 is adapted to receive at least a portion of a container 20, preferably a top portion 20a. As shown, the top portion 20a includes a lip 24 forming an opening in the container 20, a foil liner 23, a wax compound 22, a paperboard portion 22a, and a cap 21. It is preferred, however, that the top portion of the container 20a only include the lip 24 and the foil liner 23 disposed in the cap 21.

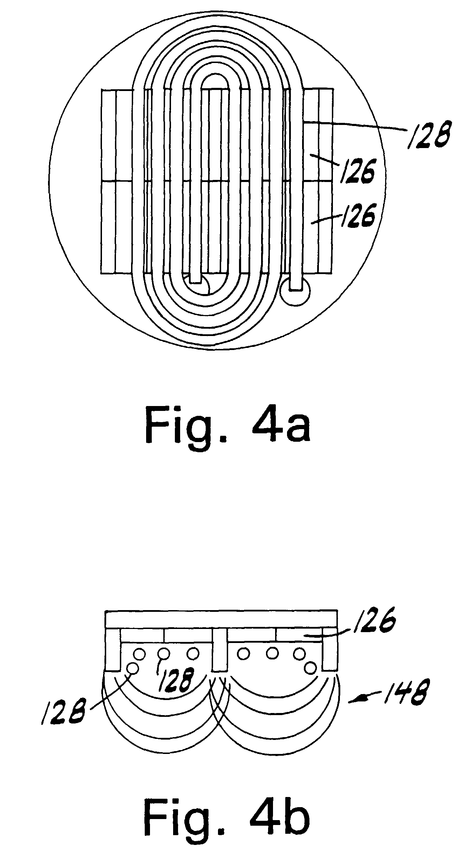

The induction sealing unit 100 seals the container 20 by sealing the foil liner 23 to the lip. 24 of the container. In use, the cap 21 including the foil liner 23 is screwed on the container 20 or attached to the container 20 by any of the known methods. The top portion 20a of the container 20 is then brought into proximity with the sealing head 120, preferably within a recessed portion 125 of the sealing head 120 such that an electromagnetic flux 148 (Fig. 4b) produced by the sealing head 120 is directed toward the top portion 20a.

When the electromagnetic flux passes through the foil liner 23, a current is produced in the foil liner 23 causing it to heat. The heating of the foil liner 23 causes the plastic material of the container lip 24 to heat and melt such that the container lip 24 fuses with the foil liner 23. When the plastic material of the container lip 24 cools, the container 20 is sealed, for example, leak proof sealed, hermetically sealed, tamper evident sealed, or tamper-proof sealed, whichever is preferred. The container 20 can be hermetically sealed by any of the known methods. If the wax compound 22 and paperboard portion 22a are used, the wax compound 22 also heats and melts in response to the heated foil liner 23, thereby releasing the foil liner 23 from the paperboard portion 22a.

The sealing head 120 includes a coil heatsink 122 having fins 123 extending upwards and away from heat generating portions of the sealing head 120 which will be described in more detail below. Further, the sealing head 120 includes a frame 124, preferably plastic, coupled to the heatsink 122.

Disposed within the frame 124 are a ferrite core 126 (preferably formed of individual cores 126a, 126b, 126c) and a litz wire coil 128 disposed adjacent to the ferrite core 126. As will be described in more detail below, the litz wire coil 128 is disposed around or proximate to the ferrite core 126 to channel the electromagnetic field and direct the field flux 148 (Fig. 4b) towards the foil liner 23 for proper performance. The litz wire 128 is coiled around the ferrite core 126 such that the electromagnetic field developed around the litz wire 128 is channeled into the ferrite core 126.

Shims 132, preferably aluminum, may be disposed between the ferrite core 126 and the frame 124 to properly position the ferrite core 126 within the frame. The ferrite core 126 is operatively coupled to the underside of the coil heatsink 122 and may be operatively coupled to the shims 132 (if used).

Sealing tape 130 may be disposed at the corners of the ferrite core 126 in order to prevent seepage of a potting compound 136 described below. Further, an electrically insulating and thermally conductive pad 134 may be disposed on the surface of the ferrite core 126 to electrically insulate the litz wire 128 from the ferrite core 126.

Preferably, the litz wire 128 includes thousands of individually insulated electrical conductors surrounded by an insulating sheath (not shown), made from polyethylene, polypropylene, teflon, or the like, which also electrically insulates the litz wire 128 from surrounding structures, including the ferrite core 126. Therefore, it is preferred that the sealing head 120 does not include the electrically insulating pad 134 in favor of the insulating sheathing directly on the litz wire 128.

A potting compound 136 is introduced into the area of the sealing head 120 defined by the frame 124, the ferrite core 126 and the litz wire coil 128 to lock the elements together and rigidly maintain the form of the structure.

Reference is now made to Fig. 3a which shows a cross-sectional view of an alternative embodiment of the sealing head 120 of the present invention. The sealing head of Fig. 3a is adapted to receive containers 20 having different sized caps 21a, 21b.

In particular, the sealing head 120 includes a stepped portion 125a within the recess 125. The stepped portion 125a includes a first lower opening portion 125b and a second upper opening portion 125c where the first opening portion 125b is larger than the second opening portion 125c. Containers 20 having larger caps 21b may be placed within the first opening portion 125b and containers 20 having smaller caps 21a may be placed within the second opening portion 125c. Thus, the cap 21 may be received in the recess of the sealing head 120 and be subject to an optimal amount of electromagnetic flux, irrespective of the size of the cap 21.

As shown in Figs. 3 and 3a, the ferrite core 126 is adapted to provide a tunnel or a U-shaped recess 125 to receive the container 20. In particular, the ferrite core 126 provides a substantially horizontally directed portion 140, two oppositely disposed and substantially vertically directed portions 142 extending from respective edges of the horizontal portion 140, and a center spine portion 126c extending substantially vertically from the horizontal portion 140 but between the oppositely disposed vertical portions 142.

It has been found that containers 20 having smaller caps 21a receive an improved amount of flux when permitted to move into the second opening portion and attain closer proximity to the center spine portion 126c.

It has also been found that employing inwardly directed cores 126b (Fig. 3a) from the lower edges 144 of the oppositely disposed vertical portions 142 direct the flux toward the container 20 in such a way as to improve the heating of the foil liner 23.

Reference is now made to Figs. 3b-3d which show alternative embodiments of the sealing head 120 of the present invention. The sealing heads 120 of Figs. 3b-3d are adapted to receive containers 20 having relatively wide caps 21, as wide as about 120 mm or more. These wide caps 21 also include relatively wide foil liners 23 (not shown). It has been found that wider foil liners 23 heat more effectively when the vertical distance D from the center spine portion 126c to the inwardly directed portions 126b is relatively small. When the vertical distance D is small, the flux lines of the field are relatively shallow and substantially horizontally directed toward the foil liner 23. Thus, relatively shallow flux lines are attained by arranging the ferrite core 126 to form a wider and shorter cross-sectional sealing head 120.

Consequently, the litz wire coil 128 of the sealing head 120 of Fig. 3b is arranged to be flat against the upper portion 140 of the ferrite core 126 and the U-shaped recess 125 for receiving the cap 21 is shallower. Figs. 3c and 3d show ferrite core 126 designs having even smaller vertical distances D, where, in the design of Fig. 3d, the distance D is close or equal to zero and, therefore, the sealing head 120 does not include a U-shaped recess at all.

Reference is now made to Figs. 3e-3g which show further alternative embodiments of the sealing head 120 of the present invention. The sealing heads 120 of Figs. 3e-3g are adapted to receive containers 20 having relatively narrow and tall caps 21, such as "mustard" caps 21c for use on mustard containers, pull-open caps 21d (for use on water bottles, sports bottles, or the like) or other types of relatively tall and narrow caps 21. These narrow caps 21 also include relatively narrow foil liners 23 (not shown). It has been found that narrow foil liners 23 heat more effectively when the vertical distance D from the center spine portion 126c to the inwardly directed portion 126b is relatively large. When the vertical distance D is relatively large, the flux lines of the field are relatively deep and substantially vertically directed in relation to the cap. This orientation of the flux lines has been formed to more effectively couple to the foil liner 23. Thus, relatively deep and substantially vertically directed flux lines are attained by arranging the ferrite core 126 to form a taller and narrower cross-sectional sealing head 120.

Consequently, the litz wire coils 128 of the sealing heads 120 of Figs. 3e-3g are arranged to be spaced substantially downwardly from the upper portion 140 of the ferrite core 126 and against the vertically directed portions 142 of the ferrite core 126. Thus, the U-shaped recess 125 for receiving the cap 21 is substantially deeper.

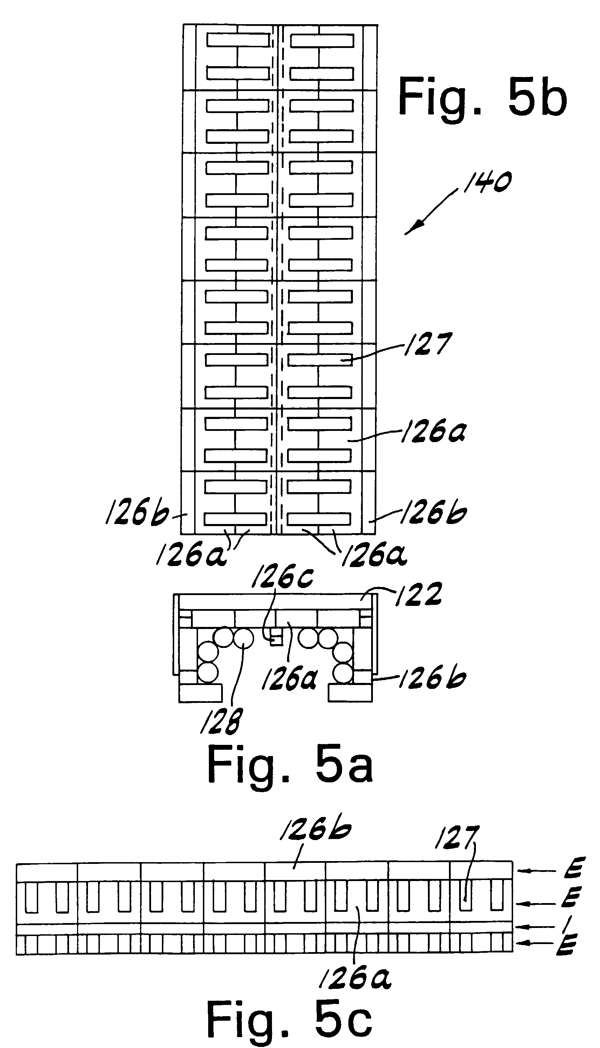

Fig. 5a shows a preferred construction for the ferrite core 126 in accordance with the invention, although it should be realized that any ferrite core arrangement can be utilized just so long as it directs the electromagnetic field toward the foil liner 23 to heat the foil liner 23. It is preferred that the ferrite core 126 be constructed from both "E" cores 126a and "I" cores 126b where the cores 126a, 126b are alternated and abutted to produce the final shape of the ferrite core 126, although all "E" cores 126a or all "I" cores 126b can also be used. In the preferred embodiment of the present invention, about fifty-six (56) "I" cores 126b and about forty-eight (48) "E" cores 126a are employed to produce the ferrite core 126. The "E" and "I" cores can be obtained from any of the known suppliers.

As shown in Fig. 5b, a top view of a first layer of cores 126a, 126b of the ferrite core 126 (i.e., the upper portion 140 of the ferrite core 126) reveals the specific arrangement of "E" cores and "I" cores. The arrangement from left to right in the figure is as follows: an "I" core 126b, two oppositely disposed and abutting "E" cores 126a, two more oppositely disposed and abutting "E" cores 126a, followed by an "I" core 126b. Fig. 5c shows a side view of the ferrite core 126 where, from top to bottom, alternating "I" cores 126b and "E" cores 126a are arranged to form the ferrite core 126. As is best seen in Fig. 5a, "I" cores are disposed on the upper portion 140 of the ferrite core 126 to form the center spine portion 126c.

With reference to Figs 3-3g and in light of the above teaching, it is noted that the arrangement of "I" and "E" cores 126a, 126b may be adjusted by those skilled in the art to achieve a desired form of the ferrite core 126. It is also noted that Fig. 5a shows yet another contemplated configuration of the litz wire 128.

Reference is again made to the specific orientation of the "E" cores of Figs. 5b and 5c. As shown, slots 127 are formed in the ferrite core 126 as a result of the oppositely abutting arrangement of the "E" cores 126a. One important feature of the slots 127 is that they provide an enlarged aggregate surface area from which to remove heat from the ferrite core 126. Indeed, ferrite material is not particularly conducive to conducting heat and the inclusion of slots 127 provides a useful means for removing heat from the ferrite material 126. It is noted that the "E" cores 126a are manufactured with the slots 127 therein; however, the particular arrangement of the slots 127 as shown in Figs. 5b and 5c insures that the slots 127 form a "channel" which is directed to or towards the heatsink 122.

The slots 127 may be filled with a high aluminum content, thermally conductive material to provide a path for heat to be carried from the ferrite core 126, specifically the "E" cores 126a and "I" cores 126b, to the heatsink 122. It is most preferred that the slots 127 be filled with a ceramic material, such as Aremco CERAMACAST™ 510 powder (which is mixed with water and applied using the directions on the container thereof) or other suitable materials. The CERAMACAST™ 510 powder may be obtained from Aremco Products, Inc. or from any of the known suppliers.

Alternatively, the slots may be filled with a potting compound 136 which is suitable for both: (i) providing a thermally conductive medium through which heat is transferred from the surface area within the slots 127 of the ferrite core 126 to the heatsink 122; and (ii) locking the frame 124, the ferrite core 126 and the litz wire coil 128 of the sealing head 120 together to rigidly maintain the form of the structure.

Further, the slots 127 may be left substantially devoid of materials (i.e., filled with air) because the slots 127 would still communicate with the heatsink 122 and transfer heat thereto.

It is also noted that the slots 127 should be oriented in a direction which is parallel to the direction of propagation of the field flux within the ferrite core 126. This insures that the field flux within the ferrite core 126 is not unnecessarily impeded.

In the construction of the sealing head 120, it is preferred that the ferrite cores 126a, 126b are first bonded to a slab of heat conductive material, for example aluminum. The heat conductive material may be the heatsink 122 itself, however, it is most preferred that the ferrite cores 126a, 126b are first bonded to a separate aluminum slab (not shown) which is later mounted to the heatsink 122.

If the aluminum slab is used, a first layer of ferrite cores 126a, 126b (Fig. 5b) are bonded to the aluminum slab using an appropriate epoxy material, such as Aremco™ No. 568 two part epoxy (applied and cured as directed on the containers thereof) or other suitable materials. The Aremco™ No. 568 two part epoxy is aluminum filled for better ferrite-to-aluminum bonding.

Next, the ferrite core 126 is further assembled to include additional ferrite cores 126a, 126b which are bonded to the first layer of ferrite cores 126a, 126b (Fig. 5a). It is preferred that the ferrite-to-ferrite bond be accomplished using an epoxy material, such as Aremco™ No. 631 two part epoxy (applied as directed on the containers thereof) or other suitable materials. Thus, the basic shape of the ferrite core 126 as shown in Fig. 5a is achieved.

At this point in the assembly of the sealing head 120, the slots 127 of the ferrite core 126 are filled with the thermally conductive ceramic material as described above.

Next, the litz wire 128 is disposed adjacent the ferrite core 126 as shown in Fig. 4a, i.e., in a coiled arrangement. It is noted that, for a conveyor system 10 (Fig. 1), the ferrite core 126 may be more elongate than that shown in Fig. 4a; however, it is understood that the length of the ferrite core 126 may be readily sized by one skilled in the art. The litz wire 128 is preferably bonded to the ferrite core 126 using a suitable epoxy material, for example Aremco™ No. 526N two part epoxy (applied and cured as directed on the packages thereof) or other suitable materials.

As discussed above, sealing tape 130 (Fig. 3) may be disposed at the corners of the ferrite core 126 (in order to prevent seepage of a potting compound 136 described below) and an electrically insulating and thermally conductive pad 134 may be disposed on the surface of the ferrite core 126 (to electrically insulate the litz wire 128 from the ferrite core 126) prior to bonding the litz wire 128 to the ferrite core 126. As discussed above, however, it is preferred that the sealing tape 130 and pad 134 be omitted.

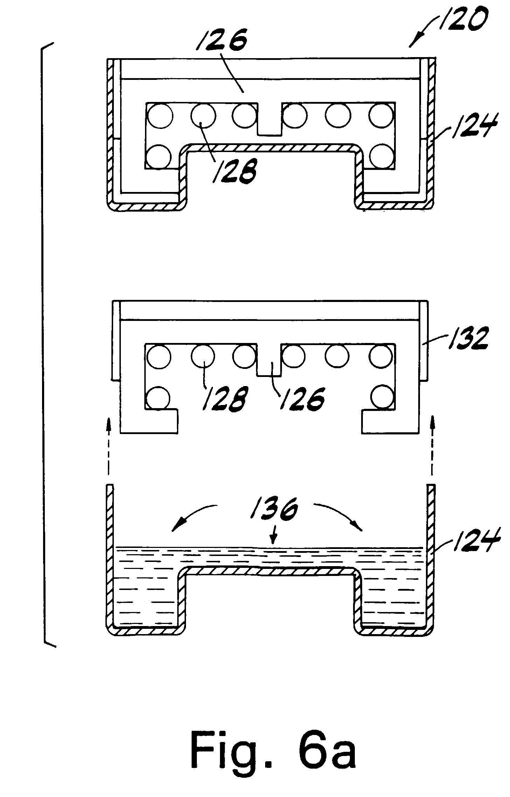

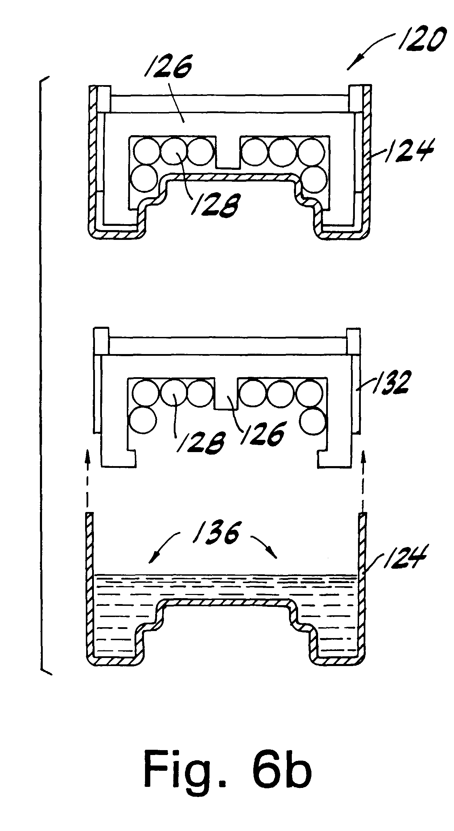

Next, the potting compound 136 is introduced into the area of the sealing head 120 defined by the frame 124, the ferrite core 126 and the litz wire coil 128 to lock the elements together and rigidly maintain the form of the structure. This is accomplished by any of the known methods, for example, by introducing a polyethylene mold into the area to define the outside surface contour of the potting compound 136 and then pouring the potting compound 136 into the area. With reference to Figs. 6a and 6b, it is preferred that the frame 124 is first filled with the potting compound 136 and then the frame 124 is moved over the ferrite core 126 and litz wire 128 subassembly to form the completed sealing head unit 120.

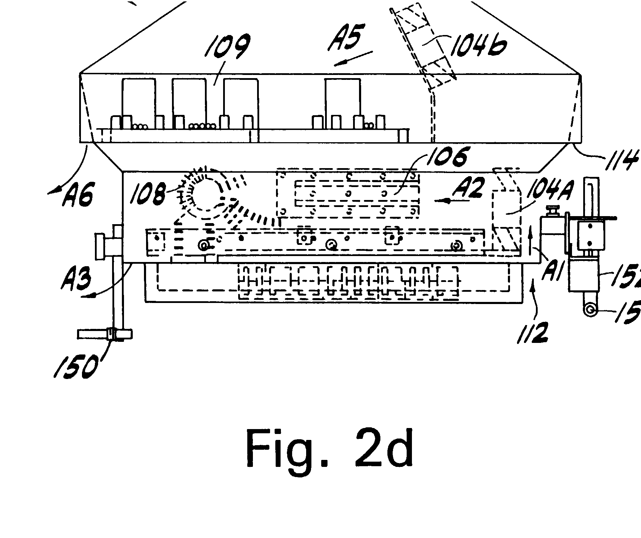

Referring now to Figs. 2a through 2d, a power supply 109 (shown in Fig. 2d), which includes solid state switching components and control circuitry, provides driving current to the sealing head 120. The capacitor 106 provides a source of capacitive reactance (C) for developing an LCR circuit with the resistance (R) and inductance (L) of the litz wire coil 128 and ferrite core 126. The transformer 108 properly matches the voltage and current sourced from the switching components of the power supply 109 to the LCR circuit.

The power supply 109 generates high frequency currents within the litz wire coil 128 of the sealing head 120 to produce an electromagnetic field of sufficient strength to cause the foil liner 23 of the container 20 to heat (Fig. 3). The power supply should deliver about 2 to 4 kilowatts of power to the sealing head 120 in order to properly seal the container 20.

The present invention may be driven by prior art power supplies (which include control electronics and solid state switching components). For example, the power supply from the 2KW COMPAK™ System Induction Seal Cap Sealer of Enercon Industries Corporation, Menomonee Falls, WI, may be used to drive the sealing head 120 of the present invention, although some modifications may be necessary. When using the Enercon COMPAK™ System power supply, the sealing head 120 of the present invention may be driven using either the Enercon COMPAK™ System's capacitor and transformer or the capacitor 106 (preferably 1 uF) and the transformer 108 (preferably having a step down ratio of 6:1) of the present invention.

The present invention contemplates using power supplies which deliver substantially higher currents (preferably 4 times higher than the prior art power supplies) to the litz wire coil 128 because the litz wire coil 128 has superior current handling properties over the prior art water cooled coils. The specific advantages of using a litz wire coil 128 are discussed in more detail below.

It is noted that the series LCR circuit has a Q factor which is a function of the specific values of the inductance (L) of the litz wire coil 128 and ferrite core 126 combination, the capacitance (C) of capacitor 106 and the resistance (R) of the litz wire coil 128. The transfer function of the LCR circuit has a peak gain value at resonance which increases with increased Q. Since, in an LCR tuned circuit (as is present in the sealing head 120 of the preferred embodiment of the present invention) the Q factor is inversely proportional to R, the Q factor of the sealing head 120 is much higher than the Q factor of conventional sealing heads.

Consequently, there is very little margin for error in providing an alternating current having a proper frequency to the tuned LCR circuit. Indeed, as the frequency of the delivered current moves away from the resonance value of the LCR circuit, the gain of the LCR circuit is greatly reduced and the current falls below that which is necessary to produce desired heating of the foil liner 23. It is noted that the prior art sealing heads also have Q factors, however, such Q factors of the prior art are much lower than that of the preferred embodiment of the present invention.

Therefore, it is preferred that the electronics, specifically the control electronics of the power supply, contain circuitry which maintains the frequency of the delivered current to the sealing head 120 (specifically, the LCR circuit) at or near resonance.

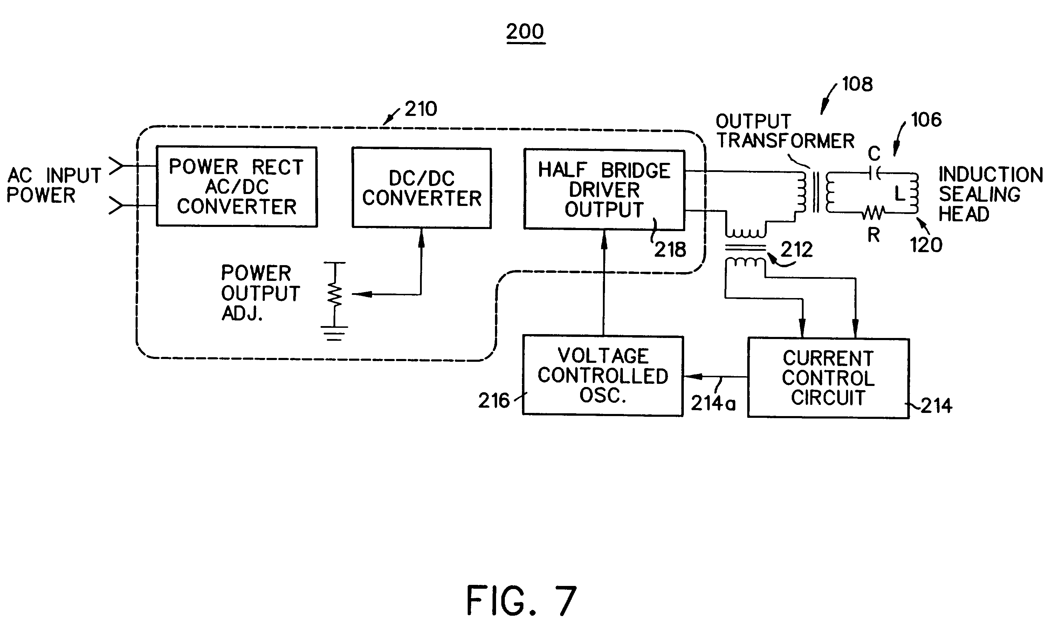

Reference is now made to Fig. 7 which shows a block diagram of a preferred power supply 200 for driving the sealing head 120 of the present invention. The power supply 200 includes a power stage 210 (having the solid state semiconductor components therein, i.e., the half bridge driver 218) and control circuitry (having a current sense transformer 212, a current control circuit 214 and a voltage controlled oscillator (VCO) 216 therein).

The operation of the power supply 200 will now be described. The current in the primary of the transformer 108 is sensed by the current sense transformer 212 and is delivered to the current control circuit 214. Thus, the current control circuit 214 utilizes a signal which is indicative of the current which flows in the sealing head 120 (specifically, the tuned LCR circuit). The current control circuit 214 outputs a signal on line 214a which changes if the current in the sealing head 120 deviates from an optimal level. The signal on line 214a controls the output frequency of the VCO 216.

The VCO 216 controls the switching characteristics of the half bridge driver circuit 218, which circuit 218 controls the frequency of the current delivered to the transformer 108 and, ultimately, the frequency of the current delivered to the sealing head 120. Thus, the output frequency of the power supply 200 is a function of current flow in the sealing head 120. As discussed above, if the frequency of the current delivered from the power supply 200 deviates from an optimal level, the current in the sealing head will vary greatly (due to the high Q of the LCR circuit). However, the control circuit of the power supply 200 maintains the current in the sealing head 120 at a desired level (by controlling the frequency of the current delivered thereto) even if the Q of the LCR circuit drifts or the output frequency of the power supply 200 attempts to deviate from an optimal value.

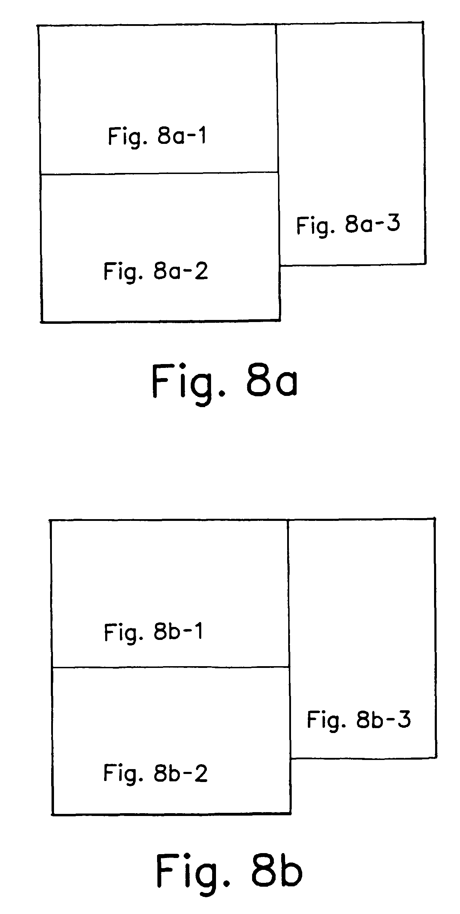

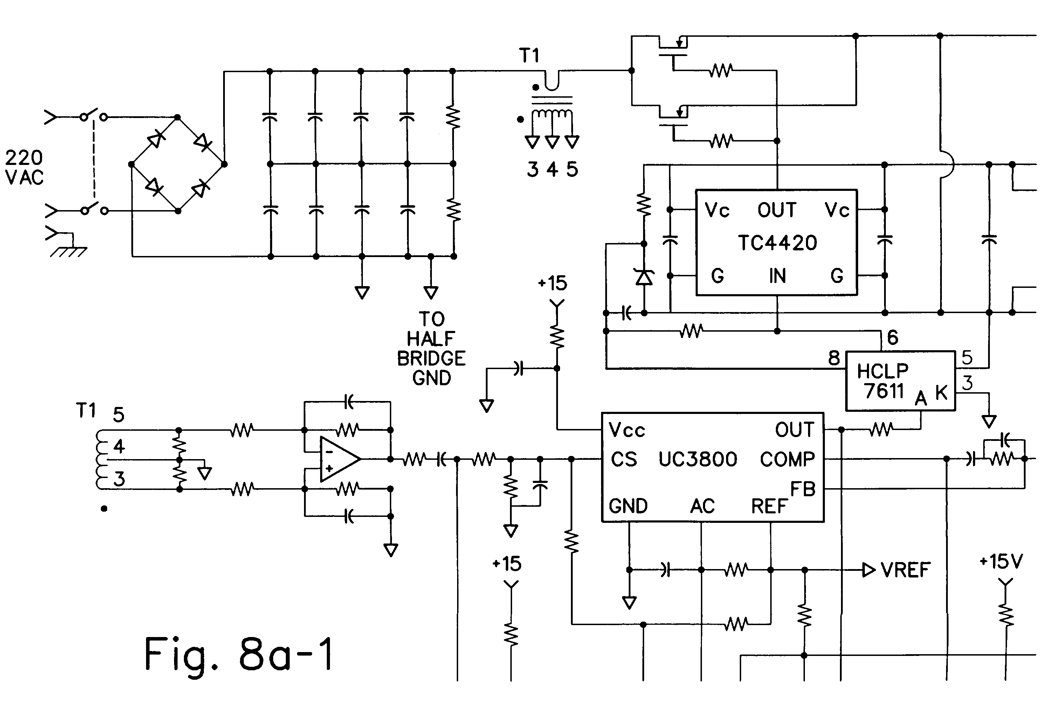

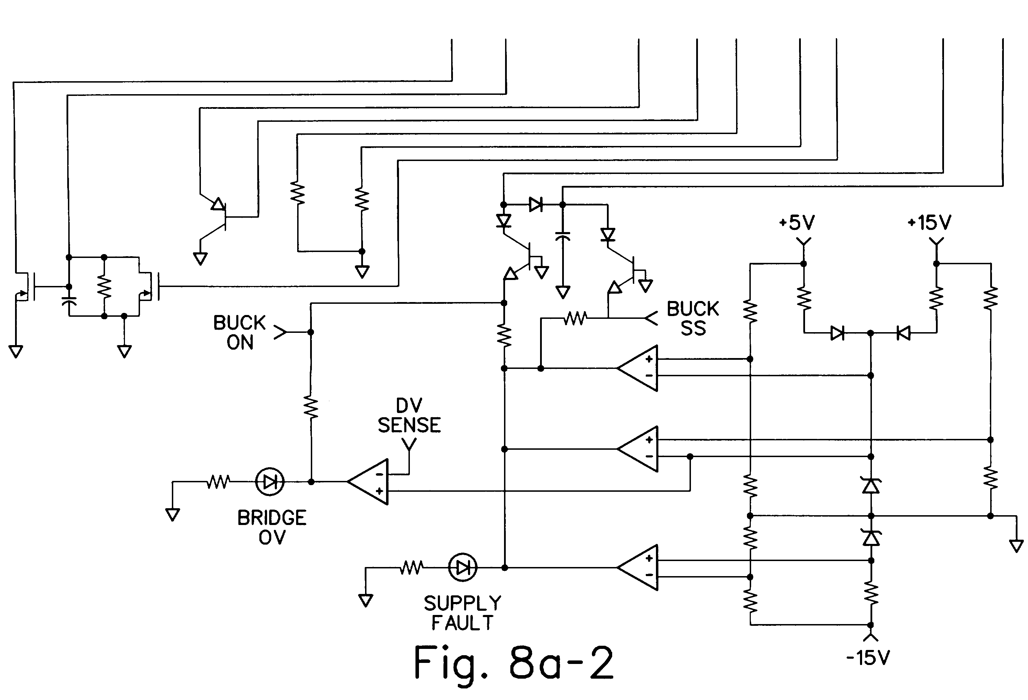

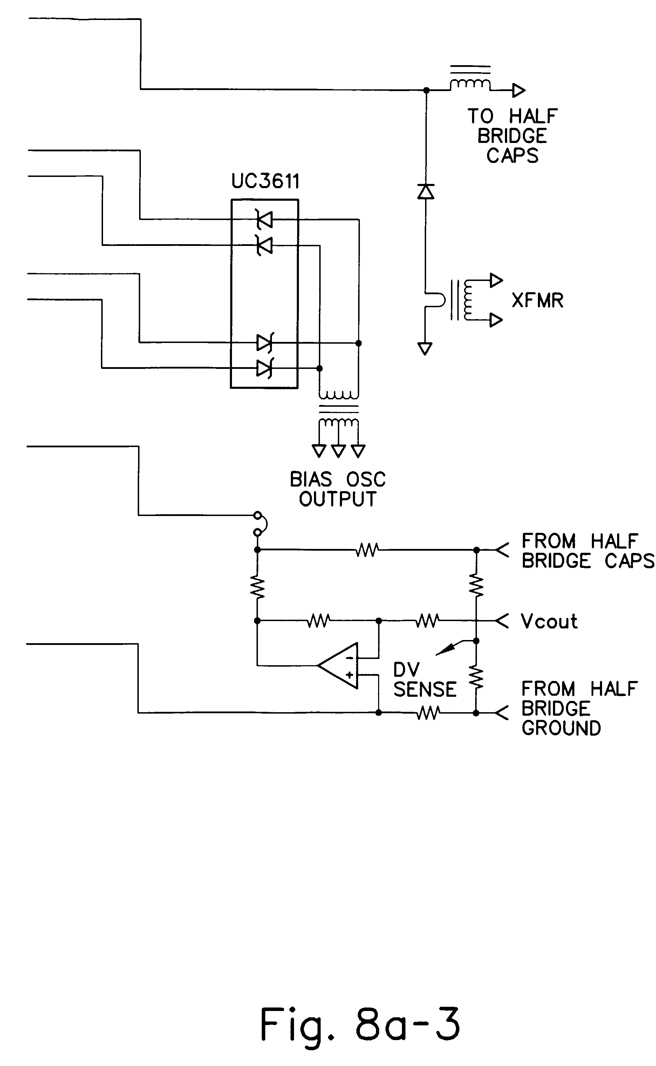

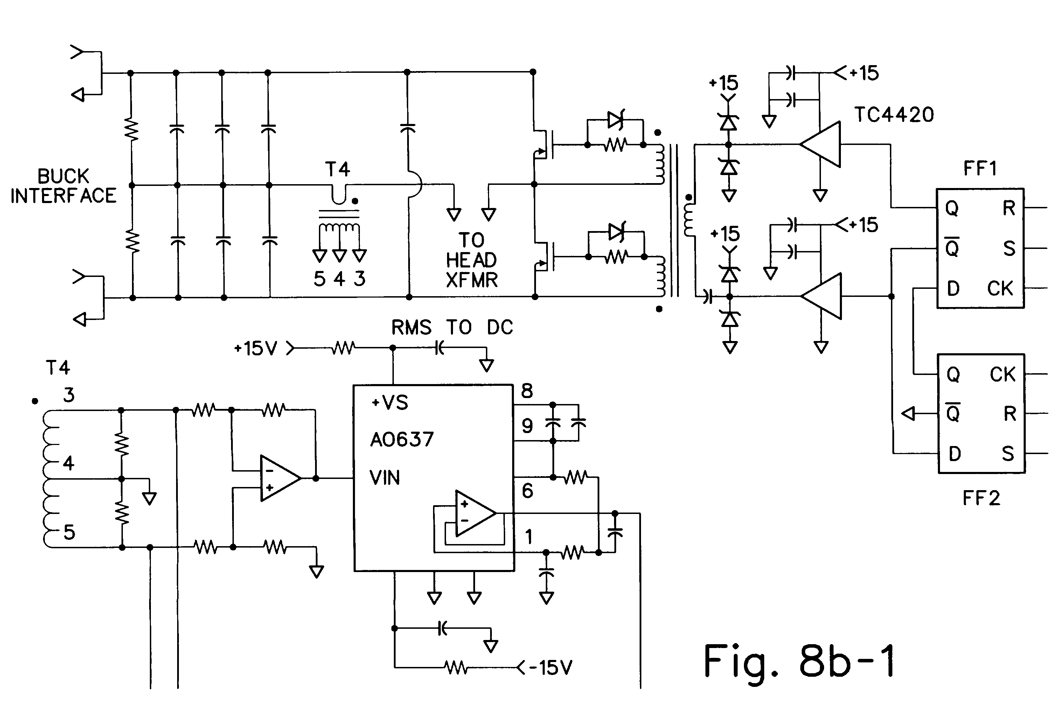

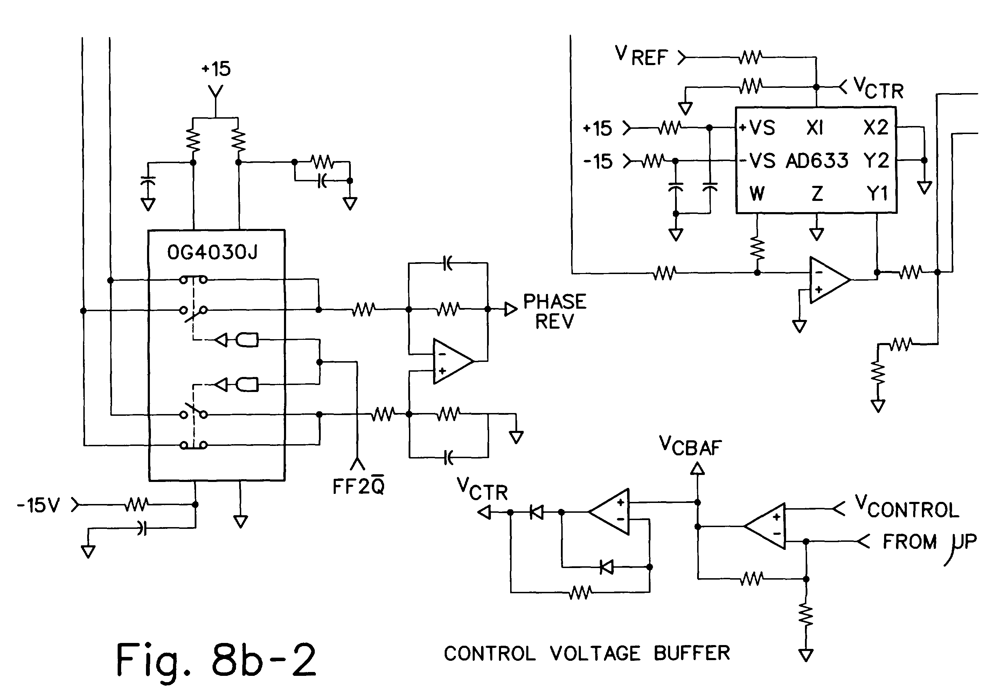

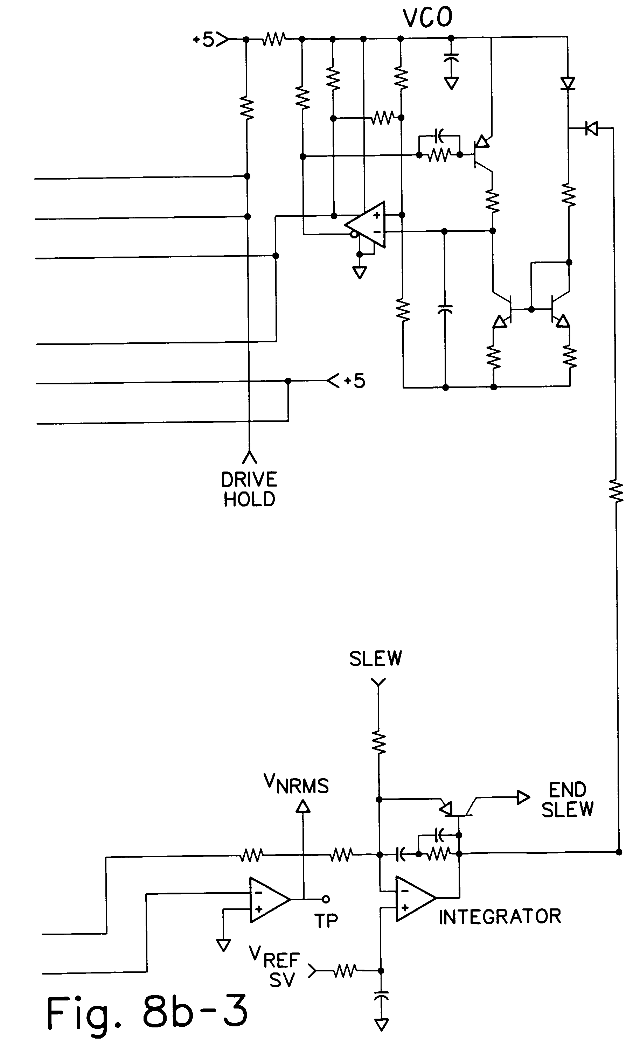

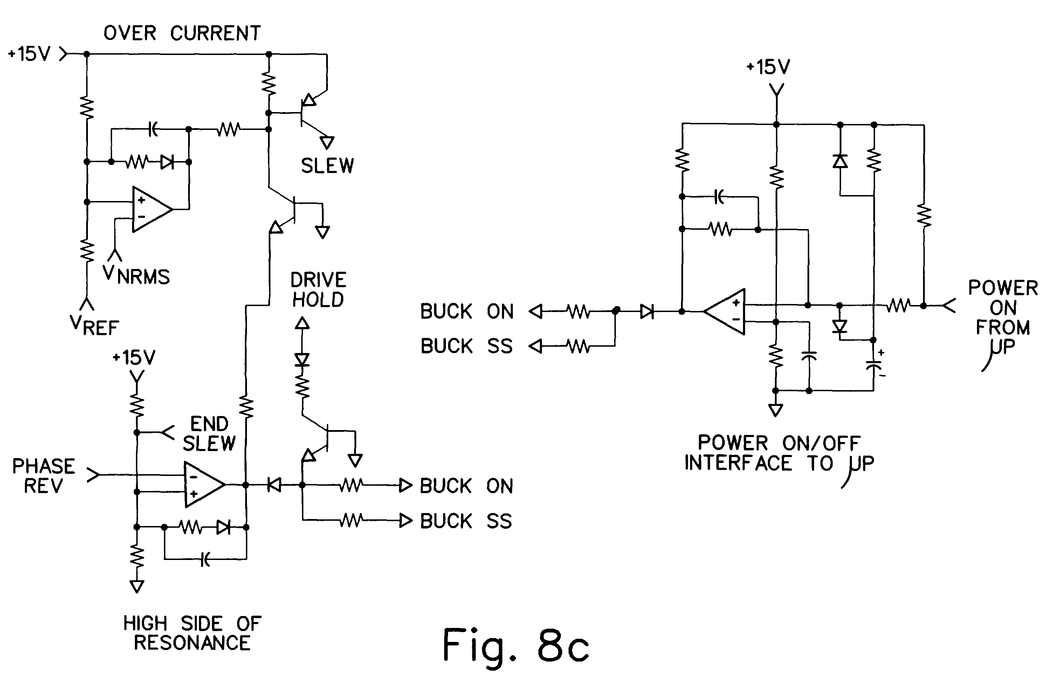

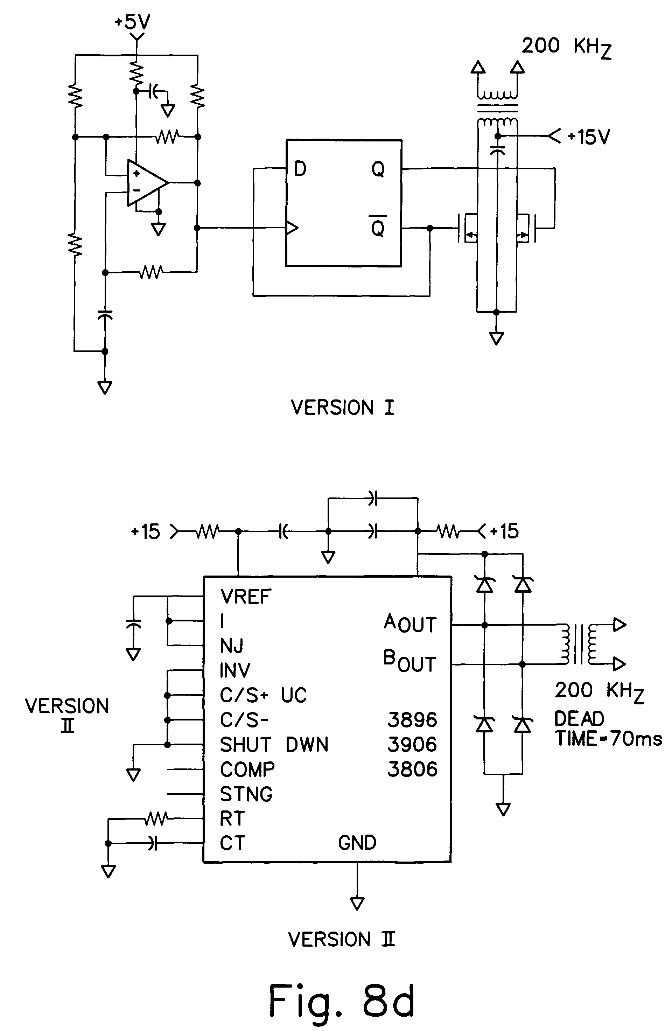

Figs. 8a-8c are included to show specific circuit diagrams of electronics which can produce the function of the power supply 200 as described above. It is noted that the specific circuit components and interconnections shown in Figs. 8a-8c merely represent one workable embodiment of the power supply 200 and the invention is in no way limited thereby.

Referring no to Fig. 4a, the litz wire coil 128 is disposed around the ferrite core 126 to channel the electromagnetic field and direct the field flux 148 (Fig. 4b) towards the foil liner 23 for proper performance. The litz wire 128 is coiled around the ferrite core 126 such that the electromagnetic field developed around the litz wire 128 is channeled into the ferrite core 126. The positioning and shape of the ferrite core 126 within the frame 124 directs the electromagnetic field to propagate near an end of the container 20 to be sealed (Figs. 3-3g and 4b).

The high currents flowing in the litz wire coil 128 and the resultant high electromagnetic field which is concentrated within the ferrite core 126 cause an elevation in the temperatures of the coil 128 and the core 126 which results in an overall rise in the temperature of the sealing head 120. The coil heatsink 122 operates to dissipate the heat that is generated within the ferrite core 126 and the litz wire coil 128. As discussed above, the ferrite core 126 is advantageously provided with slots 127 which are preferably filled with a high thermal conductivity ceramic material to carry heat from the ferrite core 126 to the heatsink 122.

Advantageously, the litz wire coil 128 has a very low resistance to the flow of current therein as compared to conventional copper tubing used in prior art devices. More specifically, since high frequency currents tend to flow near the surface of wire (known as the "skin effect") the use of multi-strand litz wire in the coil 128 reduces the resistance of the coil 128 to current flow. Litz wire having about 4,000 strands of individually insulated conductors have been available commercially. However, it is most preferred that litz wire having about 10,000 insulated strands therein be used in the litz wire core 128. Such 10,000 strand litz wire can be made by any of the known suppliers.

Thus, in accordance with the preferred embodiment of the present invention, the litz wire coil 128 is sized such that the effective resistance per unit length is only about 0.1-0.01 of the resistance per unit length of the copper tubing of the prior art. Consequently, the heat produced within the litz wire coil 128 (due to I²R losses) is reduced by a factor of 10-100 and water cooling of the sealing head 120 is not required. Indeed, the coil heatsink 122 provides all the heat dissipation necessary to safely and efficiently operate the induction sealing unit 100.

With reference to Fig. 2a, in order to enhance the operation of the coil heatsink 122 and the safe operation of the induction sealing unit 100, heat must be removed from the coil heatsink 122 and the housing 102. This is accomplished by drawing cool air into vent slots 112 by the fan 104 in the direction shown by arrow A1. Next, the air passes over the capacitor 106 (i.e., over the fins of the heatsink 106a), the transformer 108 and the fins 123 of the coil heatsink 122 in the direction shown by arrow A2. The air removes heat from the fins of the heatsink 106a, the transformer 108 and, most importantly, the fins 123 of the heatsink 122.

The use of the litz wire coil 128 improves the efficiency of the sealing head 100 and reduces the amount of heat that must be removed from, for example, the capacitor heatsink 106a and the coil heatsink 122. Consequently, the capacitor 106, the coil 128 and ferrite core 126 may be cooled using only air, which is an advantage over the water cooling of the prior art.

The air that has passed over the heatsink fins 123 then moves into an upper volume 100a of the induction sealing unit 100 in the direction shown by arrow A3. It is preferred that the power supply (control electronics and solid state switching components) be disposed in the upper volume 100 of the sealing unit 100.

Next, the air moves across the upper volume 100 of the sealing unit 100 in the direction of arrow A4 (preferably removing heat from the power supply 109). Lastly, the air moves past a baffle member 113 in the direction shown by arrow A5 and through opening 114 into the atmosphere. Thus, heat generated by the sealing head 120 is removed therefrom, thereby maintaining the sealing head 120 at a safe operating temperature without requiring water cooling as in the prior art.

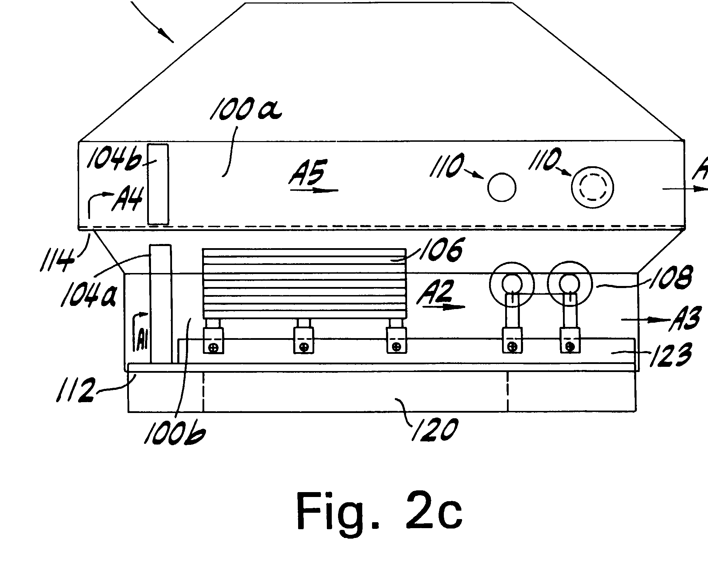

Referring again to Fig. 2a, a second fan (not shown) may be disposed in the upper volume 100a of the sealing unit to assist in moving the air in the direction of arrow A4. Referring now to Fig. 2c, in an alternative embodiment, two fans 104a and 104b are disposed in the lower 100b and upper volumes 100a of the sealing unit 100, respectively. Fan 104a pulls air A1 into vent slot 112 and blows the air in the direction of arrow A2 and out a vent at the right side of the sealing unit 100 so that the air may exit the sealing unit 100 at A3. Fan 104b pulls air A4 into vent slot 114 and blows the air in the direction of arrow A5 and out a vent at the right side of the sealing unit 100 so that the air may exit the sealing unit 100 at A6.

With the design of Fig. 2c, pre-heated air is not transferred from the lower volume of the sealing unit 100 to the upper volume. Rather, cool air is independently drawn into the upper and lower volumes of the sealing unit 100 by way of fans 104a and 104b, respectively. This is advantageous because hot air is not carried to the power supply 109 which would heat the power supply unnecessarily.

Fig. 2d shows another alternative design for cooling the sealing unit 100. The design shown in Fig. 2d is depicted from the opposite side of the sealing unit 100 than that shown in Figs. 2a and 2c. The design of Fig. 2d also utilizes two fans 104a and 104b in the upper and lower volumes 100a, 100b of the sealing unit 100, respectively.

In the sealing unit 100 of Fig. 2c, fan 104a pulls air A1 into vent slot 112 and blows the air in the direction of arrow A2 and out a vent at the opposite side of the sealing unit 100 so that the air may exit the sealing unit 100 at A3. Fan 104b pulls air A4 into vent slot 114 and blows the air in the direction of arrow A5, over power supply electronics 109, and out a vent at the opposite side of the sealing unit 100 so that the air may exit the sealing unit 100 at A6.

As was the case with the design of Fig. 2c, in the design of Fig. 2d pre-heated air is not transferred from the lower volume of the sealing unit 100 to the power supply electronics 109 in the upper volume. Rather, cool air is independently drawn into the upper and lower volumes of the sealing unit 100 by way of fans 104a and 104b, respectively.

The sealing head 100 Fig. 2d may include a stall sensor 150 for detecting whether the conveyor 400 has stopped and whether current delivery to the coil 128 should be interrupted. The sealing head 100 of Fig. 2d may also include a missing foil detector 152 and a bottle counting sensor 154 as is known in the art.

The foregoing description of the preferred embodiment of the invention has been presented for the purposes of illustration and description. It is not intended to be exhaustive or to limit the invention to the precise form disclosed. Many modifications and variations are possible in light of the above teaching.

## Claims

1. A cap sealing unit, comprising
a frame;
a ferrite core (126) disposed within the frame; and
a litz wire coil (128) disposed proximate to the ferrite core for producing an electromagnetic field within the ferrite core, characterized in that the ferrite core (126) and litz wire coil (128) form a recess (125) to receive an opening portion (24) of a container (20) and a foil (23) located proximate to the opening portion, the recess (125) adapted to direct the electromagnetic field toward the foil to seal the opening of the container with the foil.

2. The cap sealing unit of claim 1, wherein the foil (23) is electrically conductive.

3. The cap sealing unit of claim 1, wherein the field causes the foil (23) to heat and fuse to the container.

4. The cap sealing unit of claim 1, wherein the field causes the foil (23) to heat and melt the container (20) proximate to the openin (24) to fuse the foil (23) to the container (20).

5. The cap sealing unit of claim 1, wherein the litz wire coil (128) is substantially filled with strands of substantially fine, individually insulated conductors.

6. The cap sealing unit of claim 5, wherein the litz wire coil (128) includes about 10,000 strands of substantially fine, individually insulated conductors.

7. The cap sealing unit of claim 6, wherein the litz wire coil (128) includes an insulating sheath which substantially encapsulates the strands such that the strands are electrically insulated from the ferrite core.

8. The cap sealing unit of claim 7, wherein the insulating sheath is formed of polyethylene, polypropylene or teflon.

9. The cap sealing unit of claim 1, wherein the resistance per unit length of the litz wire coil (128) is about 0.1 to 0.01 of the resistance per unit length of copper tubing.

10. The cap sealing unit of claim 1, wherein the recess (125) is substantially U-shaped.

11. The cap sealing unit of claim 1, wherein the recess (125) forms a tunnel.

12. The cap sealing unit of claim 1, wherein the ferrite core of the recess comprises:
a substantially horizontally directed portion (140), and
two oppositely disposed and substantially vertically directed portions (142) extending from respective edges of the horizontal portion (140), the vertically directed portions being adapted to direct the electromagnetic field toward the container.

13. The cap sealing unit of claim 12, wherein the ferrite core further comprises a center spine portion (126c) extending substantially vertically from the horizontal portion (140) but between the oppositely disposed vertical portions (142).

14. The cap sealing unit of claim 12, wherein the ferrite core (126) further comprises at least one inwardly directed portion (126b) extending from the lower edge (144) of at least one of the oppositely disposed vertically directed portion (142), the inwardly directed portion (126b) being adapted to direct the field toward the container.

15. The cap sealing unit of claim 13, wherein a vertical distance from the center spine portion (126c) to the inwardly directed portion (126b) is relatively small for wide foils and relatively large for narrower foils.

16. The cap sealing unit of claim 1, wherein the recess (125) is adapted to receive container openings of different sizes.

17. The cap sealing unit of claim 16, wherein the recess (125) includes a stepped opening (125a) having a first larger opening (125b) and a second smaller opening (125c) to receive containers of different sizes.

18. The cap sealing unit of claim 16, wherein the ferrite core comprises a plurality of individual ferrite cores arranged in proximity to one another.

19. The cap sealing unit of claim 18, wherein the plurality of ferrite cores include E cores or I cores.

20. The cap sealing unit of claim 19, wherein the cores are disposed on a thermally conductive plate.

21. The cap sealing unit of claim 20, further comprising a heatsink (122) operatively coupled to the plate and adapted to draw and dissipate heat from the plate.

22. The cap sealing unit of claim 18, further including a heatsink (122) coupled to the frame, wherein at least some of the ferrite cores are operatively coupled to the heatsink for transferring heat thereto.

23. The cap sealing unit of claim 22, wherein the heatsink (122) includes fins (123) for transferring heat from the heatsink to air passing over the fins.

24. The cap sealing unit of claim 23, further comprising a housing, the heatsink extending at least partially into the housing.

25. The cap sealing unit of claim 24, further comprising a first fan (104) coupled to the housing for blowing air over the fins.

26. The cap sealing unit of claim 25, wherein the first fan pulls air through an opening in the housing such that the air flows over the fins of the heatsink and then out through a vent in the housing.

27. The cap sealing unit of claim 26, wherein the first fan is disposed in a lower volume of the housing.

28. The cap sealing unit of claim 27, further comprising a second fan disposed in an upper volume of the housing.

29. The cap sealing unit of claim 1, further comprising a detector (152) adapted to determine whether the foil is missing from the container.

30. The cap sealing unit of claim 1, further comprising a counter (154) dapted to determine how many containers have been sealed.

31. The cap sealing unit of claim 1, wherein the sealing unit is adapted to move the container in proximity with the electromagnetic field, the sealing unit further comprising a detector adapted to determine whether the sealing unit cannot move the container.

32. A method for sealing an opening of a container with a foil, the method comprising the steps of:
a) producing an electromagnetic field with a source;
b) directing the electromagnetic field toward an electrically conductive foil to seal an opening (24) of a container by adapting a ferrite core and a litz wire coil to form a recess (125) to receive an opening portion (24) of a container (20) and a foil (23) located proximate to the opening portion (24) and
c) cooling the source of the electromagnetic field without water.

33. The method of claim 32, wherein a litz wire coil (128) is used in the step of producing the electromagnetic field.

34. The method of claim 32, wherein a ferrite core (126) is used in the step of directing the electromagnetic field toward the electrically conductive foil.

35. The method of claim 32, wherein air is used in the step of cooling the source of the electromagnetic field without water.

36. The cap sealing unit of claim 1, wherein the container includes a cap (21) and the recess is adapted to receive container caps of different sizes.

37. The cap sealing unit of claim 1, wherein the recess (125) causes the electromagnetic field to at least partially surround the opening portion.

38. The method of claim 32, wherein the recess (125) causes the electromagnetic field to at least partially surround the opening portion (24).

39. The method of claim 32, wherein the recess (125) is substantially U-shaped.

## Patentansprüche

1. Vorrichtung zum Versiegeln eines Verschlusses, umfassend
einen Rahmen,
einen Ferritkern (126), angeordnet im Rahmen, und
eine Litzenspule (128), angeordnet unmittelbar beim Ferritkern zur Erzeugung eines elektromagnetischen Feldes im Ferritkern, dadurch gekennzeichnet, dass der Ferritkern (126) und die Litzenspule (128) eine Ausnehmung (125) formen zur Aufnahme eines offenen Teils (24) eines Behälters (20) und einer unmittelbar am offenen Teil angeordneten Folie (23), wobei die Ausnehmung (125) adaptiert ist, das elektromagnetische Feld zur Folie zu richten, um die Öffnung des Behälters mit der Folie zu versiegeln.

2. Vorrichtung zum Versiegeln eines Verschlusses nach Anspruch 1, wobei die Folie (23) elektrisch leitend ist.

3. Vorrichtung zum Versiegeln eines Verschlusses nach Anspruch 1, wobei das Feld ein Erhitzen der Folie (23) und Anschmelzen an den Behälter bewirkt.

4. Vorrichtung zum Versiegeln eines Verschlusses nach Anspruch 1, wobei das Feld bewirkt, dass die Folie (23) erhitzt wird und der Behälter (20) unmittelbar an der Öffnung (24) geschmolzen wird, um die Folie (23) an den Behälter (20) anzuschmelzen.

5. Vorrichtung zum Versiegeln eines Verschlusses nach Anspruch 1, wobei die Litzenspule (128) im Wesentlichen gefüllt ist mit Litzen von im Wesentlichen feinen, einzeln isolierten Leitern.

6. Vorrichtung zum Versiegeln eines Verschlusses nach Anspruch 5, wobei die Litzenspule (128) ungefähr 10.000 Litzen von im Wesentlichen feinen, einzeln isolierten Leitern umfasst.

7. Vorrichtung zum Versiegeln eines Verschlusses nach Anspruch 6, wobei die Litzenspule (128) eine isolierende Umhüllung umfasst, die im Wesentlichen die Litzen einschließt, so dass die Litzen vom Ferritkern elektrisch isoliert sind.

8. Vorrichtung zum Versiegeln eines Verschlusses nach Anspruch 7, wobei die isolierende Umhüllung aus Polyethylen, Polypropylen oder Teflon gebildet ist.

9. Vorrichtung zum Versiegeln eines Verschlusses nach Anspruch 1, wobei der Widerstand pro Längeneinheit der Litzenspule (128) ungefähr bei 0,1 bis 0,01 des Widerstands pro Längeneinheit eines Kupferrohrstranges liegt.

10. Vorrichtung zum Versiegeln eines Verschlusses nach Anspruch 1, wobei die Ausnehmung (125) im Wesentlichen U-förmig ist.

11. Vorrichtung zum Versiegeln eines Verschlusses nach Anspruch 1, wobei die Ausnehmung (125) einen Tunnel formt.

12. Vorrichtung zum Versiegeln eines Verschlusses nach Anspruch 1, wobei der Ferritkern der Ausnehmung umfasst: einen im Wesentlichen horizontal gerichteten Teil (140)
und
zwei gegenüber liegend angeordnete und im Wesentlichen vertikal gerichtete Teile, die sich von den jeweiligen Enden des horizontalen Teils (140) erstrecken, und wobei die vertikal gerichteten Teile gestaltet sind, um das elektromagnetische Feld zum Behälter zu richten.

13. Vorrichtung zum Versiegeln eines Verschlusses nach Anspruch 12, wobei der Ferritkern ferner einen zentralen Stachelteil (126 c), der sich im Wesentlichen vertikal vom horizontalen Teil (140) erstreckt, und zwar zwischen den gegenüber liegend angeordneten vertikalen Teilen (142), umfasst.

14. Vorrichtung zum Versiegeln eines Verschlusses nach Anspruch 12, wobei der Ferritkern (126) ferner mindestens einen nach innen gerichteten Teil (126 b), der sich vom unteren Ende (144) mindestens eines der gegenüber liegend angeordneten vertikalen Teile erstreckt, umfasst, und wobei der nach innen gerichtete Teil (126 b) gestaltet ist, das Feld zum Behälter zu richten.

15. Vorrichtung zum Versiegeln eines Verschlusses nach Anspruch 13, wobei eine vertikale Distanz vom zentralen Stachelteil (126 c) zu dem einwärts gerichteten Teil (126 b) relativ klein für starke Folien und relativ groß für weniger starke Folien ist.

16. Vorrichtung zum Versiegeln eines Verschlusses nach Anspruch 1, wobei die Ausnehmung (125) gestaltet ist, Behälteröffnungen von verschiedener Größe aufzunehmen.

17. Vorrichtung zum Versiegeln eines Verschlusses nach Anspruch 16, wobei die Ausnehmung (125) eine stufenförmige Öffnung (125 a) umfasst, die eine erste größere Öffnung (125 b) und eine zweite kleinere Öffnung (125 c) zur Aufnahme von Behältern unterschiedlicher Größe aufweist.

18. Vorrichtung zum Versiegeln eines Verschlusses nach Anspruch 16, wobei der Ferritkern eine Mehrzahl einzelner Ferritkerne, die unmittelbar benachbart zueinander angeordnet sind, umfasst.

19. Vorrichtung zum Versiegeln eines Verschlusses nach Anspruch 18, wobei die Mehrzahl der Ferritkerne E-Kerne oder I-Kerne einschließt.

20. Vorrichtung zum Versiegeln eines Verschlusses nach Anspruch 19, wobei die Kerne an einer thermisch leitenden Platte angeordnet sind.

21. Vorrichtung zum Versiegeln eines Verschlusses nach Anspruch 20, weiters umfassend einen Wärmeableiter (122), konstruktiv gekoppelt zur Platte und gestaltet, Hitze von der Platte abzuziehen und zu zerstreuen.

22. Vorrichtung zum Versiegeln eines Verschlusses nach Anspruch 18, ferner umfassend einen Wärmeableiter (122), gekoppelt mit dem Rahmen, wobei mindestens einige der Ferritkerne konstruktiv mit dem Wärmeableiter gekoppelt sind, um Wärme in ihn zu transferieren.

23. Vorrichtung zum Versiegeln eines Verschlusses nach Anspruch 22, wobei der Wärmeableiter (122) Rippen (123) zum Transferieren der Wärme vom Wärmeableiter in Luft, die über die Rippen streift, umfasst.

24. Vorrichtung zum Versiegeln eines Verschlusses nach Anspruch 23, weiters umfassend ein Gehäuse, wobei sich der Wärmeableiter zumindest teilweise in das Gehäuse erstreckt.

25. Vorrichtung zum Versiegeln eines Verschlusses nach Anspruch 24, weiters umfassend einen ersten Ventilator (104), gekoppelt ans Gehäuse zwecks Blasens von Luft über die Rippen.

26. Vorrichtung zum Versiegeln eines Verschlusses nach Anspruch 25, wobei der erste Ventilator Luft durch eine Öffnung des Gehäuses ansaugt, so dass die Luft über die Rippen des Wärmeableiters strömt und über eine Entlüftungsöffnung des Gehäuses ausströmt.

27. Vorrichtung zum Versiegeln eines Verschlusses nach Anspruch 26, wobei der erste Ventilator in einem unteren Raum des Gehäuses angeordnet ist.

28. Vorrichtung zum Versiegeln eines Verschlusses nach Anspruch 27, weiters umfassend einen zweiten Ventilator, der in einem oberen Raum des Gehäuses angeordnet ist.

29. Vorrichtung zum Versiegeln eines Verschlusses nach Anspruch 1, weiters umfassend einen Detektor (152) zum Bestimmen, ob am Behälter eine Folie fehlt.

30. Vorrichtung zum Versiegeln eines Verschlusses nach Anspruch 1, weiters umfassend eine Zähleinrichtung (154) zum Bestimmen, wie viele Behälter versiegelt wurden.

31. Vorrichtung zum Versiegeln eines Verschlusses nach Anspruch 1, wobei die Versiegelungsvorrichtung den Behälter unmittelbar mit dem elektromagnetischen Feld bewegt, wobei die Versiegelungsvorrichtung weiters einen Detektor umfasst zwecks Bestimmens, ob die Versiegelungsvorrichtung den Behälter nicht bewegen kann.

32. Ein Verfahren zum Versiegeln einer Öffnung eines Behälter mit einer Folie, wobei das Verfahren folgende Stufen umfasst:
a) Erzeugung eines elektromagnetischen Feldes mit einer Quelle;
b) Richten des elektromagnetischen Feldes zu einer elektrisch leitenden Folie zum Versiegeln einer Öffnung (24) eines Behälters durch Adaptieren eines Ferritkerns und einer Litzenspule zur Bildung einer Ausnehmung (125) zur Aufnahme eines offenen Teils (24) eines Behälters (20) und einer unmittelbar am offenen Teil (24) angeordneten Folie (23); und
c) wasserloses Kühlen der Quelle des elektromagnetischen Feldes.

33. Verfahren nach Anspruch 32, wobei eine Litzenspule (128) zur Erzeugung eines elektromagnetischen Feldes verwendet wird.

34. Verfahren nach Anspruch 32, wobei ein Ferritkern (126) verwendet wird, um das elektromagnetische Feld zur elektrisch leitenden Folie zu richten.

35. Verfahren nach Anspruch 32, wobei Luft zum wasserlosen Kühlen der Quelle des elektromagnetischen Feldes verwendet wird.

36. Vorrichtung zum Versiegeln eines Verschlusses nach Anspruch 1, wobei der Behälter einen Verschluss (21) umfasst und die Ausnehmung gestaltet ist, Behälterverschlüsse verschiedener Größe aufzunehmen.

37. Vorrichtung zum Versiegeln eines Verschlusses nach Anspruch 1, wobei die Ausnehmung (125) das elektromagnetische Feld veranlasst, den offenen Teil zumindest teilweise zu umgeben.

38. Verfahren nach Anspruch 32, wobei die Ausnehmung (125) das elektromagnetische Feld veranlasst, den offenen Teil (24) zumindest teilweise zu umgeben.

39. Verfahren nach Anspruch 32, wobei die Ausnehmung (125) im Wesentlichen U-förmig ist.

## Revendications

1. Ensemble de bouchage étanche, comprenant un bâti, un noyau de ferrite (126) disposé à l'intérieur du bâti, et
un bobinage de fil de Litz (128) disposé à proximité du noyau de ferrite en vue de produire un champ électromagnétique à l'intérieur du noyau de ferrite, caractérisé en ce que le noyau de ferrite (126) et le bobinage de fil de Litz (128) forment un évidement (125) en vue de recevoir une partie d'ouverture (24) d'un récipient (20) et une feuille (23) positionnée à proximité de la partie d'ouverture, l'évidement (125) étant conçu pour orienter le champ électromagnétique vers la feuille afin de sceller l'ouverture du récipient avec la feuille.

2. Ensemble de bouchage étanche selon la revendication 1, dans lequel la feuille (23) est électriquement conductrice.

3. Ensemble de bouchage étanche selon la revendication 1, dans lequel le champ amène la feuille (23) à chauffer et à fondre sur le récipient.

4. Ensemble de bouchage étanche selon la revendication 1, dans lequel le champ amène la feuille (23) à chauffer et à faire fondre le récipient (20) à proximité de l'ouverture (24) afin de fusionner la feuille (23) avec le récipient (20).

5. Ensemble de bouchage étanche selon la revendication 1, dans lequel le bobinage de fil de Litz (128) est principalement rempli de brins de conducteurs extrêmement fins, isolés individuellement.

6. Ensemble de bouchage étanche selon la revendication 5, dans lequel le bobinage de fil de Litz (128) comprend environ 10 000 brins de conducteurs extrêmement fins isolés individuellement.

7. Ensemble de bouchage étanche selon la revendication 6, dans lequel le bobinage de fil de Litz (128) comprend une gaine isolante qui encapsule sensiblement les brins de manière à ce que les brins soient électriquement isolés du noyau de ferrite.

8. Ensemble de bouchage étanche selon la revendication 7, dans lequel la gaine isolante est formée de polyéthylène, de polypropylène ou de Téflon.

9. Ensemble de bouchage étanche selon la revendication 1, dans lequel la résistance par unité de longueur du bobinage de fil de Litz (128) représente environ 0,1 à 0,01 de la résistance par unité de longueur d'un tube de cuivre.

10. Ensemble de bouchage étanche selon la revendication 1, dans lequel l'évidement (125) est sensiblement en forme de U.

11. Ensemble de bouchage étanche selon la revendication 1, dans lequel l'évidement (125) forme un tunnel.

12. Ensemble de bouchage étanche selon la revendication 1, dans lequel le noyau de ferrite de l'évidement comprend :
une partie orientée sensiblement horizontalement (140) et
deux parties disposées de façon opposée et sensiblement verticalement (143) s'étendant depuis les bords respectifs de la partie horizontale (140), les parties orientées verticalement étant conçues pour orienter le champ électromagnétique vers le récipient.

13. Ensemble de bouchage étanche selon la revendication 12, dans lequel le noyau de ferrite comprend en outre une partie de pointe centrale (126c) s'étendant sensiblement verticalement depuis la partie horizontale (140) mais entre les parties verticales disposées de façon opposée (142).

14. Ensemble de bouchage étanche selon la revendication 12, dans lequel le noyau de ferrite (126) comprend en outre au moins une partie orientée vers l'intérieur (126b) s'étendant depuis le bord inférieur (144) d'au moins l'une des parties disposées de façon opposée orientées verticalement (142), la partie orientée vers l'intérieur (126b) étant conçue pour orienter le champ vers le récipient.

15. Ensemble de bouchage étanche selon la revendication 13, dans lequel une distance verticale depuis la partie de pointe centrale (126c) jusqu'à la partie orientée vers l'intérieur (126b) est relativement faible pour des feuilles larges et relativement grande pour des feuilles plus étroites.

16. Ensemble de bouchage étanche selon la revendication 1, dans lequel l'évidement (125) est conçu pour recevoir des ouvertures de récipients de différentes tailles.

17. Ensemble de bouchage étanche selon la revendication 16, dans lequel l'évidement (125) comprend une ouverture à degrés (125a) comportant une première ouverture plus grande (125b) et une seconde ouverture plus petite (125c) destinées à recevoir des récipients de différente taille.

18. Ensemble de bouchage étanche selon la revendication 16, dans lequel le noyau de ferrite comprend une pluralité de noyaux de ferrite individuels disposés à proximité les uns des autres.

19. Ensemble de bouchage étanche selon la revendication 18, dans lequel la pluralité de noyaux de ferrite comprend des noyaux en E ou des noyaux en I.

20. Ensemble de bouchage étanche selon la revendication 19, dans lequel les noyaux sont disposés sur une plaque thermiquement conductrice.

21. Ensemble de bouchage étanche selon la revendication 20, comprenant en outre un dissipateur de chaleur (122) lié de façon fonctionnelle à la plaque et conçu pour extraire et dissiper de la chaleur à partir de la plaque.

22. Ensemble de bouchage étanche selon la revendication 18, comprenant en outre un dissipateur de chaleur (122) lié au bâti, dans lequel au moins certains des noyaux de ferrite sont reliés de façon fonctionnelle au dissipateur de chaleur en vue de transférer de la chaleur vers celui-ci.

23. Ensemble de bouchage étanche selon la revendication 22, dans lequel le dissipateur de chaleur (122) comprend des ailettes (123) destinées à transférer de la chaleur depuis le dissipateur de chaleur vers de l'air passant sur les ailettes.

24. Ensemble de bouchage étanche selon la revendication 23, comprenant en outre un boîtier, le dissipateur de chaleur s'étendant au moins partiellement jusque dans le boîtier.

25. Ensemble de bouchage étanche selon la revendication 24, comprenant en outre un premier ventilateur (104) associé au boîtier en vue de souffler de l'air sur les ailettes.

26. Ensemble de bouchage étanche selon la revendication 25, dans lequel le premier ventilateur aspire de l'air au travers d'une ouverture dans le boîtier de sorte que l'air circule sur les ailettes du dissipateur de chaleur et sorte ensuite par l'intermédiaire d'une évacuation dans le boîtier.

27. Ensemble de bouchage étanche selon la revendication 26, dans lequel le premier ventilateur est disposé dans un volume inférieur du boîtier.

28. Ensemble de bouchage étanche selon la revendication 27, comprenant en outre un second ventilateur disposé dans un volume supérieur du boîtier.

29. Ensemble de bouchage étanche selon la revendication 1, comprenant en outre un détecteur (152) conçu pour déterminer si la feuille est absente du récipient.

30. Ensemble de bouchage étanche selon la revendication 1, comprenant en outre un compteur (154) conçu pour déterminer combien de récipients ont été scellés.

31. Ensemble de bouchage étanche selon la revendication 1, dans lequel l'ensemble de fermeture est conçu pour déplacer le récipient jusqu'à proximité du champ électromagnétique, l'ensemble de fermeture comprenant en outre un détecteur conçu pour déterminer si l'ensemble de fermeture ne peut pas déplacer le récipient.

32. Procédé destiné à sceller une ouverture d'un récipient avec une feuille, le procédé comprenant les étapes consistant à :
a) produire un champ électromagnétique avec une source,
b) orienter le champ électromagnétique vers une feuille électriquement conductrice afin de sceller une ouverture (24) d'un récipient en adaptant un noyau de ferrite et un bobinage de fil de Litz afin de former un évidement (125) en vue de recevoir une partie d'ouverture (24) d'un récipient (20) et une feuille (23) située à proximité de la partie d'ouverture (24) et
c) refroidir la source du champ électromagnétique sans eau.

33. Procédé selon la revendication 32, dans lequel un bobinage de fil de Litz (128) est utilisé dans l'étape de production du champ électromagnétique.

34. Procédé selon la revendication 32, dans lequel un noyau de ferrite (126) est utilisé dans l'étape d'orientation du champ électromagnétique vers la feuille électriquement conductrice.

35. Procédé selon la revendication 32, dans lequel de l'air est utilisé dans l'étape de refroidissement de la source du champ électromagnétique sans eau.

36. Ensemble de bouchage étanche selon la revendication 1, dans lequel le récipient comprend un bouchon (21) et l'évidement est conçu pour recevoir des bouchons de récipient de tailles différentes.

37. Ensemble de bouchage étanche selon la revendication 1, dans lequel l'évidement (125) amène le champ électromagnétique à entourer au moins partiellement la partie d'ouverture.

38. Procédé selon la revendication 32, dans lequel l'évidement (125) amène le champ électromagnétique à entourer au moins partiellement la partie d'ouverture (24).

39. Procédé selon la revendication 32, dans lequel l'évidement (125) est sensiblement en forme de U.
